# EUROPEAN PATENT SPECIFICATION

(11) **EP 1 658 770 B1**
(45) Date of publication and mention of the grant of the patent: **07.08.2013**
(21) Application number: 05077283.9
(22) Date of filing: 10.10.2005
(51) Int. Cl.: A01G 31/02

(54) **Cultivating channel for supporting substrate material and plants growing therein in a greenhouse**
Kultivierungskanal um Substrate und darin wachsende Pflanzen in einem Gewächshaus anzubringen
Gouttière formant un support pour substrat et plants cultivés dans ledit substrat, dans la culture sous serre

(30) Priority: 17.11.2004 NL 1027534
(43) Date of publication of application: 24.05.2006
(73) Proprietor: WDP Draadbewerking B.V., 2469 EM Erp (NL)
(72) Inventor: Delisse, Wilhelmus Hendrikus Johannes, 5469 VH Erp (NL)
(74) Representative: Dorna, Peter

(56) References cited:
- NL-A- 9 001 486
- NL-A- 9 100 112
- NL-C- 1 015 698
- US-A- 5 261 185
- US-B1- 6 247 269

## Description

The present invention relates to a cultivating channel for supporting substrate material and plants growing therein in a greenhouse, according to the preamble of claim 1.

In modern greenhouse cultivation frequent use is made of cultivating channels, also referred to as substrate channels. Such channels are arranged parallel to each other in a greenhouse, with the length of the individual channels running to as much as several dozen metres, depending on the dimensions of the greenhouse. The channels are either suspended from the roof construction of the greenhouse or supported on spaced-apart supporting stands.

In general, two types of cultivating channels can be distinguished, viz. concave cultivating channels, to which the introduction above relates, and convex cultivating channels. Figures 1 and 4 on the one hand and figures 2 and 3 on the other hand in WO-A2-01/22800 show examples of a concave cultivating channel and a convex cultivating channel, respectively.

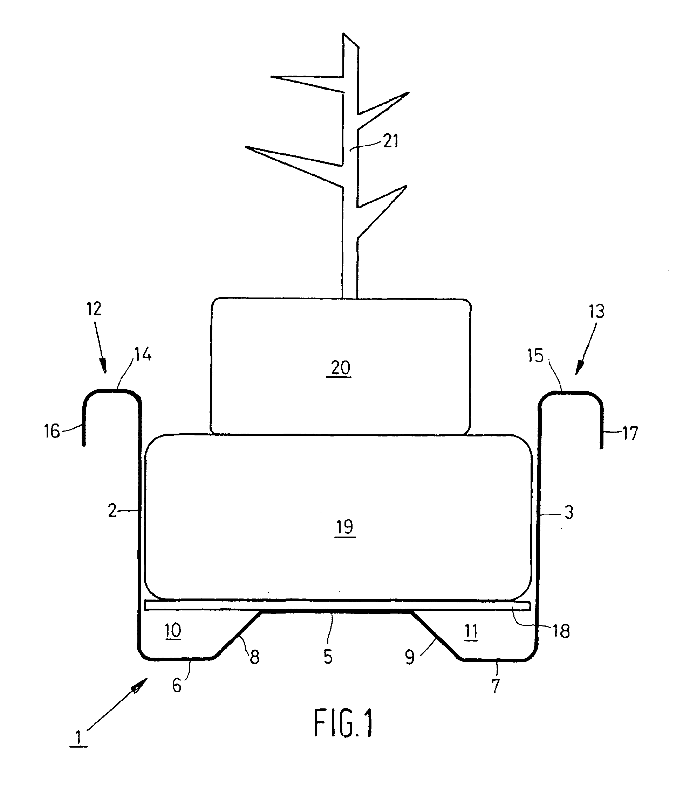

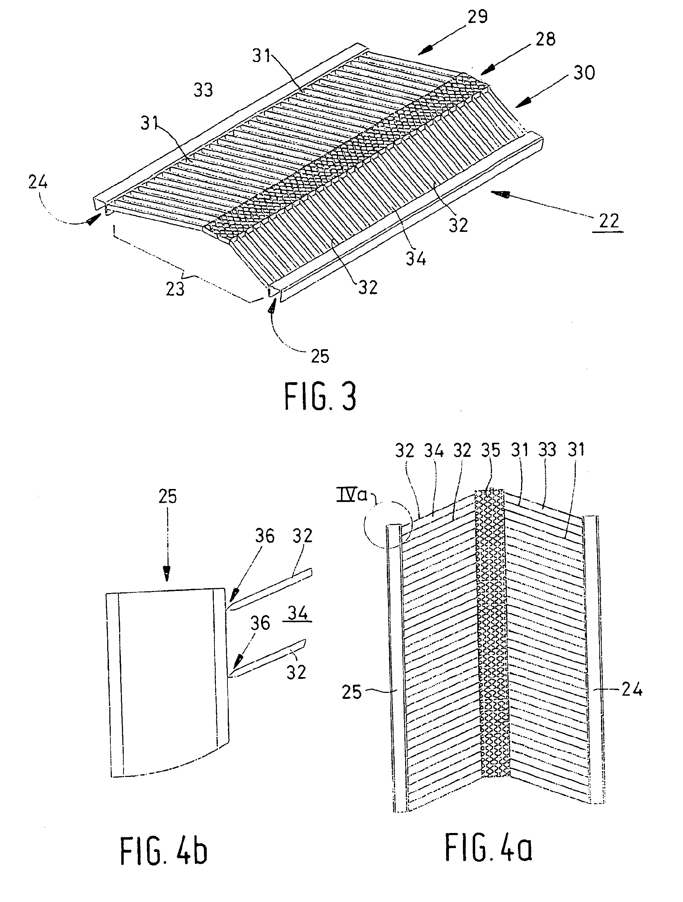

Using the same numerals as used in the aforesaid figures of the aforesaid patent application, a number of substrate mats 7 arranged one behind another, seen in longitudinal direction, is in practice placed on the bottom 6 of a concave cultivating channel, which substrate mats extend over the entire width of the channel between the vertical longitudinal wall portions thereof. A substrate mat 7 is made up of a packaging bag of plastic material containing substrate material. After an opening has been formed in the package at the upper side of the substrate mat 7 and a leak-off opening has been formed in the lowermost point of the package (not shown in figures 1 and 4), a pot containing a plant such as a tomato plant is placed on the upper side of the substrate mat 7 at the location of the opening, after which said plant will start to grow, with the roots of the plant growing from the pot into the substrate material of the substrate mat 7. The growth of the plants is stimulated by supplying a great deal of water to the plants and the substrate material, more water even than the plants and the substrate material are capable of absorbing. The excess water leaves the package again via the leak-off opening at the lowermost point thereof and eventually lands in discharge channels 4. In practice it has become apparent that besides the water also the root system of the plants leave the leak-off opening at the lowermost point of the substrate mat 7 and starts to grow into the drain channels 4. This phenomenon is further reinforced by the fact that hardly any light or no light at all can enter the drain channels 4, whilst in addition water is abundantly present in the area in which the roots grow. The root systems growing into the drain channels 4 frequently cause the drain channels to become clogged, which has an adverse effect on the circulation of water via the drain channels 4.

As a result, the use of the concave cultivating channel as shown in figures 2 and 3 of WO-A1-01/22800 has become more common. Such a cultivating channel has a Ω-shaped cross-section, in which a substrate mat 8 is placed on the upper horizontal part 9 of the Ω-shape. Two vertical wall portions are provided at the lower ends of the horizontal parts of the Ω-shape, so that drain channels 12 are formed. Because of the distance between the upper horizontal part 9 and the drain channels 12, combined with a light that can shine on the area at the outer side of the convex cultivating channel between the upper, horizontal part 9 and the drain channels 12, roots will not easily grow into the drain channels from the substrate mats 8, as roots do not flourish in light and air. On the other hand, the drain channels 12 are so small that these drain channels 12, too, easily become clogged in practice, for example with falling leaves, fruits or the like.

A cultivating channel as referred to in the introduction is known from Dutch laid-open publication No. 9100112. Said document discloses a concave U-shaped cultivating channel, on the upper edges of the vertical side walls of which a wire grid is supported. In use, substrate blocks on which plants grow are placed on the wire grid. A very important drawback of this known cultivating channel is the fact that the meshes of the wire grid are so large that the substrate material tends to sag in the meshes between the wires of the grid. This renders the cultivating channel unsuitable for use in combination with substrate mats in which the substrate material is present in a liquid-tight packaging bag, because water will collect at the location where said sagging takes place, which water cannot move out of the packaging bag unless a leak-off opening is formed in the packaging bag for every mesh at the lowermost point thereof. Said stationary water causes the quality of the substrate material in the packaging bag to deteriorate, which may result in plant disease and root rot. Especially if the substrate mats have a length such that they extend over a number of meshes, it is in any case objectionable from an economic viewpoint to form a leak-off opening for all the meshes in the packaging bag, insofar it is at all possible to determine the exact location of the lowermost point of the bags before the substrate mats are placed on the wire grid. In addition to that, the extent to which the substrate mat is supported by the wire grid exactly at the location of the leak-off openings will be quite limited, so that there is a risk of the leak-off opening becoming torn and/or of the substrate material flowing out of the packaging bag.

The object of the present invention is to provide a cultivating channel which is in particular suitable for use with substrate material that is packaged in a water-tight packaging bag, wherein on the one hand clogging of the channel via which excess water is discharged will not occur, or at any rate significantly less easily, whilst on the other hand the occurrence of stationary water remaining behind in the packaging bag is prevented. In order to accomplish that object, the supporting means of the cultivating channel according to the invention comprise a supporting plate having a supporting surface for supporting the substrate material with the plants, which supporting surface bounds the cavity at the upper side thereof. The use of a supporting plate achieves that the entire cavity, or at least a major part thereof, is in principle available for discharging excess water, in which connection it should be realised that the height of the cultivating channel is to a significant degree determined by the requirements that are made of the cultivating channel as regards the maximum degree of deflection thereof between the suspension or supporting points of the cultivating channel. Whereas only a small part of the height of both the concave cultivating channel and the convex cultivating channel is utilised or at least available for discharging excess water, it is in principle possible to use the entire height of the cultivating channel according to the invention for this purpose, a very important advantage of which is that the risk of clogging of the cultivating channel, as a consequence of which an adequate discharge of water is no longer possible, is practically excluded. Furthermore it should be realised in this connection that because of the relatively large distance that exists between the supporting plate and the bottom of the channel, the roots are not likely to grow through the air towards the bottom of said channel, as roots do not tend to grow through air. In addition to that, substrate mats in which the substrate material is present in a packaging bag will not tend to sag locally, precisely because of the plate-like nature of the supporting means, but on the contrary are supported over at least substantially the entire supporting surface, so that the risk of stationary water being present in the packaging bag of the substrate mat is significantly reduced or even excluded.

To effect an adequate discharge of excess water from the packaging bags, it is greatly preferred for the supporting surface to exhibit a slope between an uppermost point and a lowermost point, seen in cross-sectional view. In use, one opening or a number of openings is (are) formed in the packaging bag at the location of the lowermost point in that case.

An embodiment that is constructionally advantageous because of its simplicity is obtained if the supporting surface is at least substantially concave or convex, seen in cross-sectional view. In the case of a concave cross-section, the excess water will drain towards the centre of the supporting surface, whereas the excess water will flow towards the opposed longitudinal sides of the supporting surface in the case of a convex cross-section.

Preferably, the supporting plate is at least substantially V-shaped, seen in cross-sectional view. The apex angle of such a V-shape will preferably range between 181 degrees and 120 degrees, more preferably between 181 degrees and 150 degrees.

In a greatly preferred embodiment, the supporting surface is provided with at least one vertical passage for passing water from the upper side of the supporting plate to the cavity. In this way it is not necessary to rely on gaps that may be present between adjacent supporting plates or elsewhere for the discharge of excess water. The passages may also function to transmit light, which has an inhibiting effect on root growth. In addition, the size of the passages may be geared to preventing the entry of dirt, such as leaves and fruits, into the cultivating channel through the vertical passages.

Furthermore preferably, said at least one vertical passage is provided at the location of a lowermost point of the supporting surface in that case, which point may be formed by the point of the V-shape of the cross-section of the supporting plate in accordance with a preferred embodiment as discussed in the foregoing.

According to the invention the supporting plate is connected to the longitudinal wall portions. On the one hand the stiffness of the cultivating channel increases in this manner, whilst in addition to that the supporting plate can be prevented from undesirably becoming detached from or moving with respect to the cultivating channel.

Especially when metal sheet material is used for the supporting plate, it is advantageous that according to the invention the supporting plate is connected to the longitudinal wall portions by means of a folded joint. This is furthermore in particular advantageous if the supporting plate is combined with a new cultivating channel that is rolled in situ, during which rolling operation the folded connection can be effected.

According to a very important preferred embodiment, the supporting surface comprises a number of supporting plate portions which are pivotable with respect to each other so as to vary the spacing between the two longitudinal sides of the supporting plate. This makes it possible to adapt the dimensions of the supporting plate, more specifically of the supporting surface thereof, to the dimensions of the cultivating channel in question. Cultivating channels are formed in a greenhouse by means of a roller from a roll of steel sheet, and in the past a large number of different dimensions have been used for cultivating channels. The present preferred embodiment now makes it possible to form a large number of different cultivating channels, using one and the same type of supporting plate, with the dimensions of the supporting plate being geared to those of the cultivating channel by pivoting the supporting plate portions relative to each other.

It is greatly preferable if the supporting plate portions are at least substantially pivotable in their own plane. In this way the shape of the supporting plate will remain substantially the same during pivoting movement of the supporting plate portions relative to each other, in contrast to the situation in which said pivoting would take place about a pivot axis that extends parallel to the longitudinal direction of the channel, for example, which would also be possible within the framework of the present invention for that matter.

Preferably, the supporting plate is made of a manually deformable material so as to enable the supporting plate portions to pivot relative to each other through deformation. In this way there is no need to provide separate mechanical hinges or the like about which the supporting plate portions can pivot relative to each other.

In another advantageous preferred embodiment, the supporting plate is provided with at least one film hinge about which the supporting plate portions can pivot relative to each other. Because of its nature, such a film hinge can be integral with the remaining part of the supporting plate.

A constructionally very practical preferred embodiment is characterized in that adjacent supporting plate portions are interconnected via a connecting edge that extends in the longitudinal direction of the cultivating channel.

Especially in the light of the preferred embodiment in which the supporting plate is made of a material that is to be deformed manually, it will be advantageous if at least some of the supporting plate portions are provided with parallel girders whose longitudinal direction includes an angle with the longitudinal direction of the cultivating channel, which angle changes when the supporting plate portions pivot relative to each other. In this way at least some of the vertical passages are provided between the parallel girders for the passage of water from the upper side of the supporting plate to the cavity.

To have the deformation of the cultivating take place mirror-symmetrically, it is furthermore preferable if at least two supporting plate portions are provided with parallel girders in a mirror-symmetric manner.

To increase the level of stability, it is furthermore preferably if a central supporting plate portion is provided in the centre of the supporting surface. Such a supporting plate portion may form a rigid whole within the supporting surface of the supporting plate, relative to which adjacent supporting plate portions can pivot.

The present invention has this additional advantage that in certain respects lower requirements can be made of the cultivating channels as such. For example, the cultivating channels no longer need to be able to accommodate a substrate mat in the cavity thereof, whilst in addition separate drain channels, such as the drain channels 4 in figure 4 of WO-A1-01/22800, are no longer needed. This makes it possible to realise a considerable saving not only as regards the material of the cultivating channel but also as regards the number of rolling angles to be used with the cultivating channels. These advantages can result in a much cheaper embodiment of the cultivating channels. It is greatly preferable within this framework if the longitudinal wall portions define a V-shape between them. This makes it possible to achieve a smaller volume per linear metre of the cavity, with an unchanged height of the cultivating channel, in comparison with prior art cultivating channels, which are substantially U-shaped or W-shaped. The smaller volume is nevertheless amply sufficient for discharging excess water.

Preferably, the apex of the V-shape ranges between 20 degrees and 150 degrees, more preferably between 60 degrees and 120 degrees.

Although it is possible within the framework of the preferred embodiment as described above for the bottom sides of the longitudinal wall portions to join each other directly, said bottom sides of the longitudinal wall portions preferably join each other via a bottom portion, since this rules out the possibility of material being stationary in the point of the V-shape. It is noted in this connection that the limited width at the bottom of the V-shape promotes a rapid through-flow of excess water.

The bottom member may be arcuate in shape, so that one rolling operation will suffice, but it may also be oriented horizontally, in which case two rolling operations are required.

According to a very advantageous preferred embodiment, the cultivating channel according to the invention is characterized in that means are provided for changing the dimension of the supporting plate, seen in a direction transversely to the cultivating channel, so as to be able to adapt the dimension in question of the supporting plate to the width of the cultivating channel.

The present invention finally relates to a method for adapting an existing cultivating channel in a greenhouse according to claim 21.

Preferably, the method according to the invention comprises the steps of
- providing a supporting plate whose supporting surface comprises a number of supporting plate portions that are capable of pivoting movement relative to each other, and
- pivoting said supporting plate portions relative to each other so as to gear the spacing between the two longitudinal sides of the supporting plate to the dimension of the cultivating channel before the supporting plate is fitted.
In this way one and the same supporting plate is suitable for use with cultivating channels of varying size, in particular of varying width.

Furthermore preferably, the supporting surface is provided with at least one vertical passage for passing water from the upper side of the supporting plate to the bottom side thereof.

The present invention will now be explained in more detail by means of a description of the preferred embodiment of the invention, in which reference is made to the following figures:
Figure 1 is a schematic, cross-sectional view of a prior art cultivating channel.
Figure 2 shows a cultivating channel.
Figure 3 is a perspective view of a supporting plate.
Figure 4a is a bottom view of the supporting plate of figure 3.
Figure 4b shows the detail IVb of figure 4a.
Figure 5 shows the supporting plate of figure 3 in narrowed condition.
Figure 6a is a bottom view of the supporting plate of figure 5.
Figure 6b shows the detail Vlb of figure 6a.
Figure 7 is a top plan view of an alternative embodiment of a supporting plate.
Figure 8 shows a relatively wide cultivating channel used in combination with the supporting plate of figure 3.
Figure 9 shows a relatively narrow cultivating channel used in combination with the supporting plate of figure 5.
Figure 10 shows an alternative use of a cultivating channel as shown in figure 8.
Figure 11 is a cross-sectional view of an alternative cultivating channel used in combination with a supporting plate as shown in figure 3.
Figure 12a is a bottom plan view of another of the relative embodiment of a cultivating channel according to the present invention.
Figure 12b shows the detail Vllb of figure 12a.
Figure 13 is a perspective view of an embodiment of a cultivating channel according to the present invention.
Figures 14a and 14b are two vertical views of the cultivating channel of figure 13.
Figure 15 shows the detail XV of figure of 14a.

Insofar as applicable, like parts will be indicated by the same numerals in the various figures.

Figure 1 shows a cultivating channel 1 as used at the time of the present invention. The cultivating channel 1 has a length of several dozen metres and has been formed in situ from a roll of sheet material in a greenhouse, using a rolling machine.

The cultivating channel 1 comprises two opposed vertical longitudinal wall portions 2, 3, which are interconnected at the lower ends thereof via a bottom 4. The bottom 4 is centrally provided with a raised bottom portion 5 with two lower bottom portions 6, 7 on either side thereof, which raised bottom portion 5 is connected to the respective lowered bottom portions 6, 7 via sloping bottom portions 8, 9. Because of the fact that the bottom 4 comprises a raised bottom portion 5 as well as two lowered bottom portions 6, 7, discharge channels 10, 11 are formed between the sloping bottom portions 8, 9 and the longitudinal wall portions 2, 3, which discharge channels form part of the total volume that is enclosed by the longitudinal wall portions 2, 3 and the bottom 4. At their upper sides, the longitudinal wall portions 2, 3 are provided with outwardly flanged edges 12, 13 comprising horizontal upper wall portions 14, 15 and downwardly extending wall portions 16, 17.

Whether the cultivating channel 1 is suspended from the roof of the greenhouse or supported on a floor of the greenhouse, supporting points are provided for the cultivating channel 1 at regular intervals, for example every 4 or 5 m. To prevent the cultivating channel 1 from deflecting too much between said supporting points, the supporting channel 1, or more specifically, the longitudinal wall portions 2, 3 and the downwardly extending wall portions 16, 17 need to have a specific height so as to give the cultivating channel 1 sufficient flexural stiffness.

In use, Perspex plates 18 are laid on the bottom 4, more specifically on the raised bottom portion 5 thereof, so that the discharge channels are to a significant extent closed at their upper sides as well. Subsequently, substrate mats 19 are placed on the Perspex plates 18, the width of which mats is practically equal to the spacing between the two longitudinal wall portions 2, 3. The substrate mats 19 comprise a package containing substrate material. An opening in the form of a cut is formed in the lowermost point of said package, so that water can exit the package of the substrate mat 19 under the influence of the force of gravity at all times in order to be subsequently discharged via the discharge channels 10, 11. At the upper side of the substrate mat 19 an opening is formed in the package thereof as well, in which opening a pot 20 containing a plant 21, such as a tomato plant, is placed. Because of the presence of the opening in the upper a side of the package of the substrate mat 19, roots can grow from the pot 20 into the substrate material of the substrate mat 19.

The use of the cultivating channel 1 as described above has this drawback that roots growing from the cut-opening and the bottom side of the package of the substrate material 19 and these will find their way into the discharge channels 10, 11 through chinks and the like between the perspex plates, which may result in said discharge channels becoming clogged. It should be realised in this connection that hardly any light can enter the discharge channels 10, 11, so that favourable conditions for root growth prevail at that location.

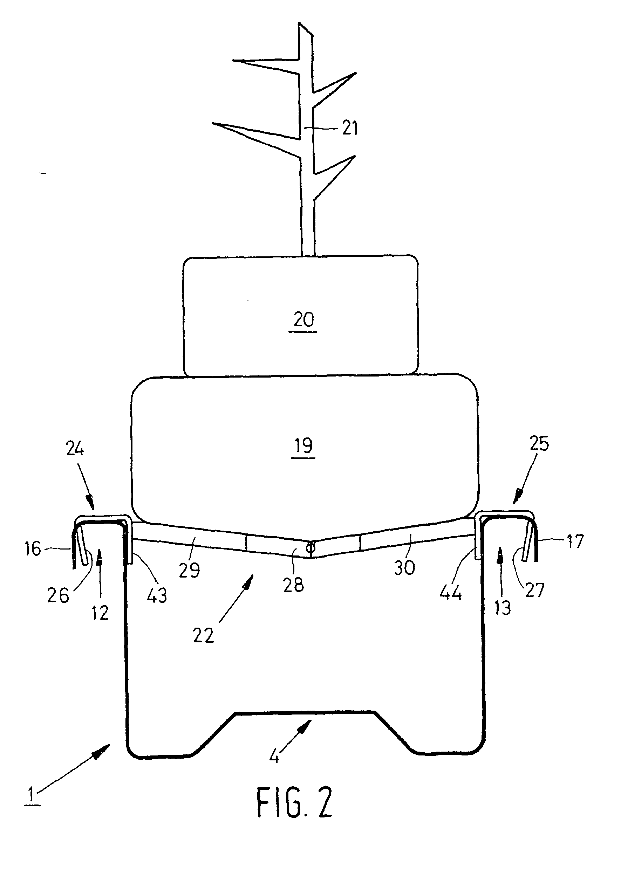

Figure 2 shows the cultivating channel 1 in combination with a supporting plate 22, which is also shown in figure 3. The supporting plate 22 comprises a supporting part 23 for supporting substrate mats 19, on which pots 20 containing plants 21 are present. The supporting plate 22 is provided with U-shaped engagement portions 24, 25 on either longitudinal side of the supporting part 23, which engagement portions are open at their bottom side, so that they can engage around the flanged edges 12, 13 of the cultivating channel 1 in a shape-locked manner. Figure 2 shows downwardly extending outer edges 26, 27 of the engagement portions 24, 25 positioned on the inner sides of downwardly extending wall portions 16, 17 of the flanged edges 12, 13, whilst in fact they are positioned on the outer side. The engagement portions 24, 25 are shown in undeformed condition in figure 2. The material of the engagement portions 24, 25 is flexible, however, so that in fact the downwardly extending edges 26, 27 will clampingly engage around the downwardly extending wall portions 16, 17 when the engagement portions 24, 25 are fitted round the flanged edges 12, 13. The downwardly extending edges 43, 44 of the engagement portions 24, 25 will be positioned on the inner side of the vertical longitudinal wall portions 2, 3 in that case.

The supporting part 23 comprises a central portion 28 and outer portions 29, 30 positioned on either side thereof. As figure 2 shows, the supporting part 23 is slightly V-shaped, seen in cross-sectional view, with the lowermost point being located in the centre of the central portion 28. The central part 28 is rectangular in shape, seen in top plan view, whilst the outer a portions 29, 30 exhibit the mirror-symmetrical shapes of a parallelogram. The central part 28 is a framed grid comprising diamond-shaped passages 35, which grid is neither suitable nor intended for being deformed, whereas the outer portions 28, 30, on the other hand, are explicitly intended to deform, for reasons yet to be explained in more detail, and that in such a manner that the angle between two adjacent sides of the parallelogram will change.

The supporting plate 22 has a length of a few dozen centimetres, for example 50 cm, so that a large number of supporting elements 22 (typically two per metre) must be provided for each cultivating channel 1 in order to cover the cultivating channel 1 at the upper side along the entire length thereof. The supporting plate 22 is entirely made of plastic material and has been produced by means of an injection moulding process. The individual supporting elements 22 can be interconnected by connecting means (not shown) such as a snap connection, thus forming a closed surface at the upper side of a cultivating channel 1.

Each outer portion 29, 30 comprises a number of parallel strip members 31, 32, between which elongated passages 33, 34 extend. Film hinges connect the strip members 31, 32 to the engagement portions 24, 25 on the one hand and to the frame of the central portion 28 on the other hand. In figure 4b the film hinges 36 are visible between the strip members 32 and the engagement portion 25. The film hinges enable pivoting movement about vertical axes through the film hinges between the parts that are interconnected at the location of the film hinges 36.

The main advantage achieved by using supporting elements 22 in combination with a cultivating channel 1 can be elucidated with reference to figure 2. It will be understood that the part of the cultivating channel 1 between the longitudinal wall portions 2, 3 and above the bottom 4 that is available for discharging excess water is significantly larger than the discharge channels 10, 11 (see figure 1). This fact in itself already leads to a considerably reduced risk of clogging. This effect is further enhanced by the fact that a considerable spacing is present between the bottom side of the substrate mat 19 and the bottom 4, since roots generally do not grow well in open air. Consequently, the main advantage of using the supporting plate 22 in combination with cultivating channels 1 that are known per se is that the risk of clogging of the cultivating channel 1, as a consequence of which excess water cannot be properly discharged, has been reduced to a minimum.

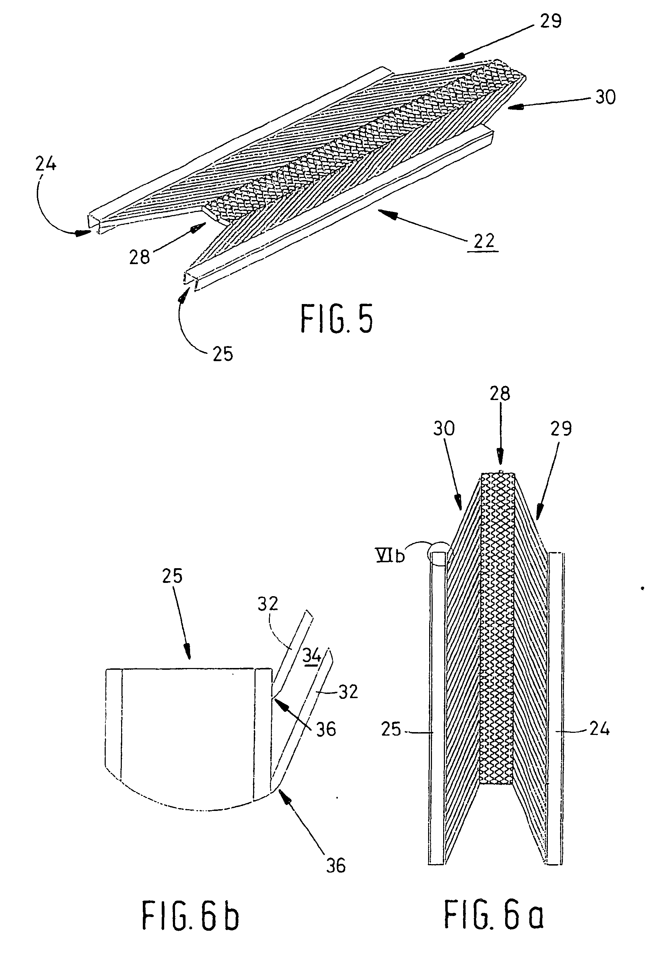

Precisely because cultivating channels such as the cultivating channel 1 are made in situ and because it is readily possible to adapt the dimensions and the shape of cultivating channels to the user's requirements by changing the settings of the rolling machine used for forming the cultivating channels 1, cultivating channels exist in various dimensions and shapes. As a result, the spacing between the two vertical longitudinal wall portions 2, 3 of existing cultivating channels is not fixed but varies approximately between 15 cm and 30 cm in practice. The supporting plate 22 is now configured such that it can be used in combination with cultivating channels of varying width dimensions. The aforesaid film hinges at the ends of the strip members 31, 32 function to make this possible. Figure 5 shows a narrow version of a supporting plate 22, in which the engagement portions 24, 25 have been moved towards each other, causing the strip members 31, 32 to include a more acute angle with the longitudinal direction of the supporting plate 22. The film hinges such as the film hinge 36 make this possible. The vertical distance between two adjacent strip members 32 has become small, to be true, as a result of which the through-flow area of the passage 34 has also become smaller, but this is acceptable, since the size of the passages 34 is still amply sufficient for the excess water to pass therethrough, insofar as necessary, which water will be discharged mainly via the diamond-shaped passages 35 in the central portion 28 anyhow. The shape and the size of said diamond-shaped passages 35 will remain unchanged during the movement of the engagement portions 24, 25 towards or away from each other.

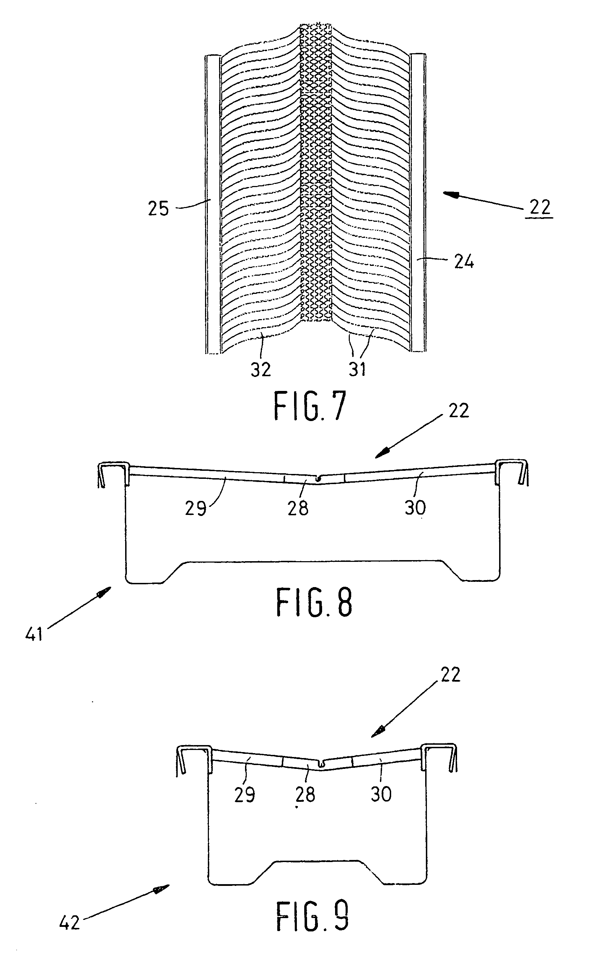

It is also possible to configure a supporting plate 22 without film hinges, whilst it is nevertheless possible to move the engagement portions 24, 25 thereof towards and away from each other by utilising the capacity to deform of the parallel strip members 31, 32. Figure 7 shows the supporting plate 22 as if it were configured without film hinges. The deformations of the originally straight strip members 31, 32 caused by the movement apart of the engagement portions 24, 25 are schematically shown in figure 7, which strip members 31, 32 will invariably return to their straight shape with the passage of time due to relaxation.

A comparison between figures 8 and 9, which show a wide cultivating channel 41 and a narrow cultivating channel 42, respectively, in combination with a supporting plate 22 in wide condition and a supporting plate 22 in narrow condition, respectively, clearly shows that one and the same supporting plate 22 is suitable for use with cultivating channels 41, 42 of varying width, with the apex angle of the V-shape defined by the outer portions 29, 30 hardly being affected, in any case not to a relevant extent, by the width of the supporting plate 22.

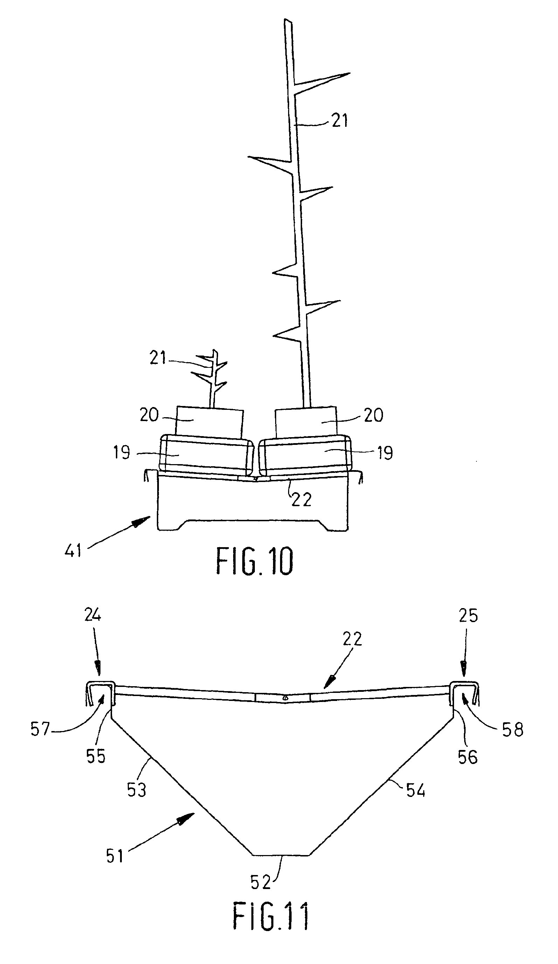

Figure 10 shows a use of the cultivating channel in which two substrate mats 19 arranged side by side, seen in transverse direction, are used, on each of which substrate mats a pot 20 containing a plant 21 is placed.

Figure 11 shows a cultivating channel 51 in combination with a supporting plate 22 as extensively discussed in the foregoing. The cultivating channel 51 is configured significantly differently from the cultivating channels as known at the time of the present invention. The cultivating channel 51 comprises a bottom 52 with two sloping wall portions 53, 54 on either side thereof, which wall portions include an angle of about 90° with each other, seen in cross-sectional view. A vertical wall portion 55, 56 having flanged edges 57, 58 is provided at the upper longitudinal side of said sloping walls 53, 54. The flanged edges 57, 58 enable engagement by the engagement portions 24, 25 of the supporting plate 22. The volume that is enclosed by the bottom 52, the sloping wall portions 53, 54, the vertical wall portions 55, 56 and the supporting plate 22 is amply sufficient for discharging excess water. As is the case with the existing cultivating channels, the overall height of the cultivating channel 51 is to a significant extent determined by the admissible extent of deflection of the cultivating channel 51 between two supporting points. As a result of the V-shape defined by the sloping wall partitions 53, 54, the flow rate of water at the bottom of the V-shape will be relatively high, which also has a positive effect as regards the prevention of clogging. An important advantage of the cultivating channel 51 in comparison with the existing cultivating channels, such as the cultivating channel 1 in figure 1, is the fact that the cultivating channel 51 comprises fewer angles and is thus easier to manufacture, whilst in addition the cultivating channel 51 requires less material, given an unchanged width at the upper side, because of the use of the sloping wall portions 53, 54.

Based on the above it will be apparent to those skilled in the art that it is also possible to configure the cultivating channel 51 differently, for example by having the sloping wall portions 53, 54 join each other directly without using a (horizontal) bottom 52, in which case the sloping wall portions 53, 54 may be interconnected via a radius, for example. Alternatively it is also possible to give the wall portions downwardly of the vertical wall portions 55, 56 a semicircular configuration instead of using sloping wall portions 53, 54 and a bottom 52, although the saving of material that is achieved with this variant is less than the saving achieved with the cultivating channel 51, given an unchanged height of the cultivating channel.

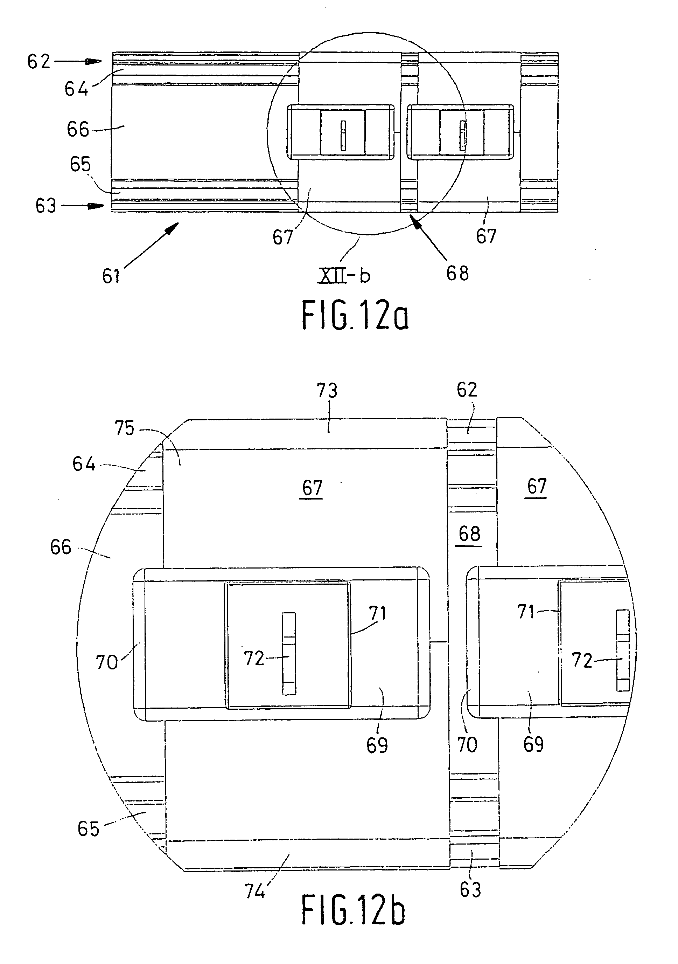

Figure 12a shows a cultivating channel 61 of the same type as the cultivating channel 1 according to figure 1, with flanged longitudinal edges 62, 63, lowered bottom portions 64, 65 and a raised bottom portion 66 in the centre. Said flanged longitudinal edges 62, 63 support closed supporting plates 67, only two of which are shown in figure 12 for the sake of clarity. The supporting plates 67 are configured as a bent closed plate, for example made of steel, which, on account of said bending, is provided with flanged edges 73, 74 comparable to the engagement portions 24, 25 of the supporting plate 22 as shown in figure 3, for example, with a supporting surface 75 present therebetween. The supporting plates 67, or at least the supporting surface thereof, have a slightly V-shaped cross-sectional comparable to the cross-section of the supporting plate 22 in figure 8.

The supporting plates 67 are so positioned relative to each other that a gap 68 is present therebetween. Each supporting plate 67 supports a substrate mat 69, one end of which is suspended above a gap 68 between two adjacent supporting plates 67. An opening is formed in the bottom side of the substrate that 69 at the location of said end 70, through which opening excess water can fall into the cultivating channel 61 from the substrate mats 69. It should be noted in this connection that the cultivating channel 61 slopes down to the left in figure 12a, as a result of which also the bottom side of the left-hand end 70 of each substrate mat 69 forms the lowermost point of the substrate mat 69 in question.

A pot 71 containing a plant 72 is in turn placed on each substrate mat 69, which mat has a length that substantially corresponds to the dimension of each supporting plate 67, seen in the longitudinal direction of the cultivating channel 61. Excess water which was originally supplied to the substrate material in the pot 71 but which has not been absorbed by the plant 72 or by the substrate material in the substrate mat 69 will eventually leave the substrate mat 69 via the opening at the bottom side of the end 70 and via a gap 68 between the supporting plates 67.

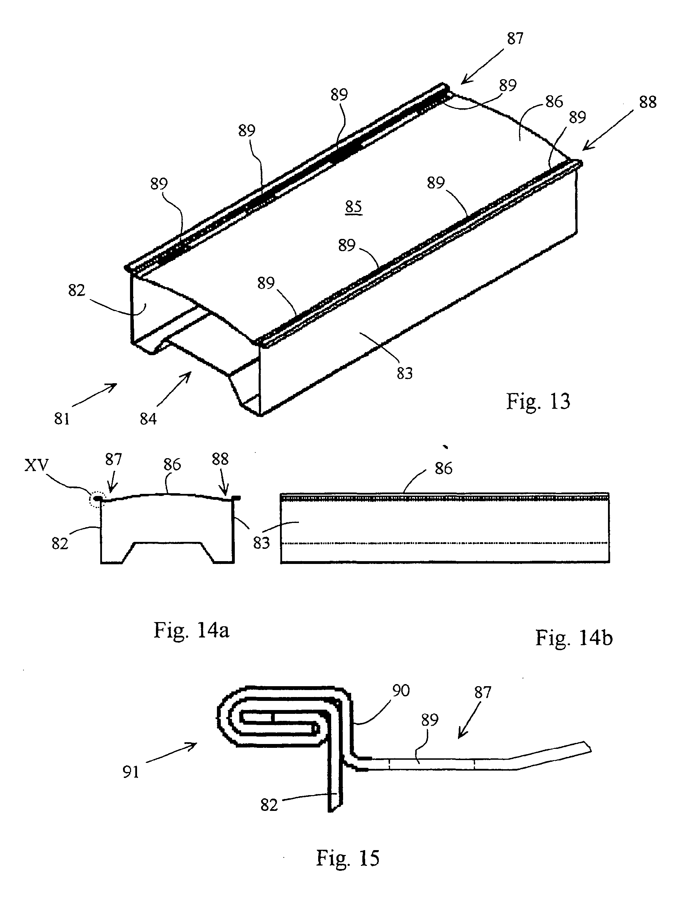

The cultivating channel 81 according to the present invention and that is shown in figures 13-15 is of a type comparable to that of the cultivating channel 1 of figure 2, comprising a bottom 84 and vertical longitudinal wall portions 82, 83. Provided on top of the cultivating channel 81 is a supporting plate 85 made of metal sheet material. The supporting surface 86 is of slightly spherical cross-section along the main part of the width of the supporting plate 85. Said spherical cross-section merges into flat portions 87, 88 at the two opposed longitudinal edges thereof, where evenly spaced through slotted holes 89 are provided in the supporting plate 85. At the outer sides of the respective flat portions 87, 88 the supporting plate 85 comprises respective upright edges 90, so that a channel is locally formed at the location of the flat portions 87, 88, to which excess water from a packaging bag that is placed on the supporting surface 86 will flow in order to be discharged via the slotted openings 89. At least two openings rather than one are formed in the packaging bag, viz. at the lowermost longitudinal edges thereof. The supporting plate 85 is connected to the vertical longitudinal wall portions 82, 83 by means of a folded connection 91, as is shown in figure 15. Said folded connection is preferably effected upon installation in situ of the cultivating channel 81, when the cultivating channel is formed from a flat sheet by means of rolling operations, during one of which operations the folded connection 91 can be effected.

## Claims

1. A cultivating channel (81) for supporting substrate material (19) and plants (21) growing therein in a greenhouse, comprising two longitudinal wall portions (82, 83), between which a cavity is present at least partially for discharging excess water that was previously supplied to the plants (21) which longitudinal wall portions are interconnected at the lower ends via a bottom (84), said cultivating channel being embodied in combination with supporting means for supporting the substrate material with the plants, said supporting means comprising a supporting plate (85) having a supporting surface (86) for supporting the substrate material with the plants, which supporting surface (86) bounds the cavity at the upper side thereof, **characterized in that** the supporting plate is connected to the longitudinal wall portions by means of a folded joint.

2. A cultivating channel according to claim 1, **characterized in that** the supporting surface exhibits a slope between an uppermost point and a lowermost point, seen in cross-sectional view.

3. A cultivating channel according to claim 2, **characterized in that** the supporting surface is at least substantially concave or convex, seen in cross-sectional view.

4. A cultivating channel according to claim 3, **characterized in that** the supporting plate is at least substantially V-shaped, seen in cross-sectional view.

5. A cultivating channel according to any one of the preceding claims, **characterized in that** the supporting surface is provided with at least one vertical passage (33, 34, 35; 89) for passing water from the upper side of the supporting plate to the cavity.

6. A cultivating channel according to claim 5, **characterized in that** said at least one vertical passage is provided at the location of a lowermost point of the supporting surface.

7. A cultivating channel according to any one of the preceding claims, **characterized in that** the supporting surface comprises a number of supporting plate portions which are pivotable with respect to each other so as to vary the spacing between the two longitudinal sides of the supporting plate.

8. A cultivating channel according to claim 7, **characterized in that** the supporting plate portions are at least substantially pivotable in their own plane.

9. A cultivating channel according to claim 7 or 8, **characterized in that** the supporting plate is made of a manually deformable material so as to enable the supporting plate portions to pivot relative to each other through deformation.

10. A cultivating channel according to claim 7, 8 or 9, **characterized in that** the supporting plate is provided with at least one film hinge (36) about which the supporting plate portions can pivot relative to each other.

11. A cultivating channel according to any one of the claims 7-10, **characterized in that** adjacent supporting plate portions are interconnected via a connecting edge that extends in the longitudinal direction of the cultivating channel.

12. A cultivating channel according to any one of the claims 7-11, **characterized in that** at least some of the supporting plate portions are provided with parallel girders (31, 32) whose longitudinal direction includes an angle with the longitudinal direction of the cultivating channel, which angle changes when the supporting plate portions pivot relative to each other.

13. A cultivating channel according to claim 12, **characterized in that** at least two supporting plate portions are provided with parallel girders in a mirror-symmetric manner.

14. A cultivating channel according to any one of the claims 7-13, **characterized in that** a central supporting plate part (28) is provided in the centre of the supporting surface.

15. A cultivating channel according to any one of the preceding claims, **characterized in that** said longitudinal wall portions define a V-shape between them.

16. A cultivating channel according to claim 15, **characterized in that** the apex of the V-shape ranges between 20 degrees and 150 degrees, preferably between 60 degrees and 120 degrees.

17. A cultivating channel according to claim 15 or 16, **characterized in that** the bottom sides of the longitudinal wall portions join each other via a bottom portion.

18. A cultivating channel according to claim 17, **characterized in that** said bottom portion is arcuate in shape.

19. A cultivating channel according to claim 18, **characterized in that** said bottom portion is horizontally oriented.

20. A cultivating channel according to any one of the preceding claims, **characterized in that** means are provided for changing the dimension of the supporting plate, seen in a direction transversely to the cultivating channel, so as to be able to adapt the dimension in question of the supporting plate to the width of the cultivating channel.

21. A method for adapting an existing cultivating channel in a greenhouse, said cultivating channel comprising two longitudinal wall portions with a cavity therebetween, which method comprises the steps of
- providing a supporting plate comprising a supporting surface for supporting substrate material with plants present therein,
- fitting the supporting plate in such a manner that said supporting surface bounds the cavity at the upper side thereof, **characterized by** the step of connecting the supporting plate to the longitudinal wall portions by means of a folded joint.

22. A method according to claim 21, **characterized by** the steps of
- providing a supporting plate whose supporting surface comprises a number of supporting plate portions that are capable of pivoting movement relative to each other, and
- pivoting said supporting plate portions relative to each other so as to gear the spacing between the two longitudinal sides of the supporting plate to the dimension of the cultivating channel before the supporting plate is fitted.

23. A method according to claim 21 or 22, **characterized in that** the supporting surface on the longitudinal sides of the supporting plate is positioned higher than the central portion of the supporting plate between the two longitudinal sides.

24. A method according to claim 21, 22 or 23, **characterized in that** the supporting surface is provided with at least one vertical passage for passing water from the upper side of the supporting plate to the bottom side thereof.

## Patentansprüche

1. Kultivierungskanal (81) zum Tragen von Substratmaterial (19) und darin wachsender Pflanzen (21) in einem Gewächshaus, mit zwei Längswandabschnitten (82, 83), zwischen denen ein Hohlraum wenigstens teilweise zum Ablauf von überschüssigem Wasser vorhanden ist, das zuvor den Pflanzen (21) zugeführt worden ist, wobei die Längswandabschnitte an den unteren Enden über einen Boden (84) miteinander verbunden sind, wobei der Kultivierungskanal mit Tragmitteln zusammen für das Tragen des Substratmaterials mit den Pflanzen ausgebildet ist, wobei die Tragmittel eine Tragplatte (85) aufweisen, die eine Tragfläche (86) zum Tragen des Substratmaterials mit den Pflanzen hat, wobei die Tragfläche (86) den Hohlraum an seiner oberen Seite begrenzt, **dadurch gekennzeichnet, dass** die Tragplatte mittels einer Falzverbindung mit den Längswandabschnitten verbunden ist.

2. Kultivierungskanal nach Anspruch 1, **dadurch gekennzeichnet, dass** die Tragfläche im Querschnitt gesehen eine Neigung zwischen einem höchsten Punkt und einem tiefsten Punkt aufweist.

3. Kultivierungskanal nach Anspruch 2, **dadurch gekennzeichnet, dass** die Tragfläche im Querschnitt gesehen wenigstens im Wesentlichen konkav oder konvex ist.

4. Kultivierungskanal nach Anspruch 3, **dadurch gekennzeichnet, dass** die Tragplatte im Querschnitt gesehen wenigstens im Wesentlichen V-förmig ist.

5. Kultivierungskanal nach einem der vorhergehenden Ansprüche, **dadurch gekennzeichnet, dass** die Tragfläche mit wenigstens einem vertikalen Durchgang (33, 34, 35; 89) zum Leiten von Wasser von der Oberseite der Tragplatte zum Hohlraum versehen ist.

6. Kultivierungskanal nach Anspruch 5, **dadurch gekennzeichnet, dass** der wenigstens eine vertikale Durchgang an dem Ort eines tiefsten Punktes der Tragfläche vorgesehen ist.

7. Kultivierungskanal nach einem der vorhergehenden Ansprüche, **dadurch gekennzeichnet, dass** die Tragfläche eine Anzahl von Tragplattenabschnitten aufweist, die zueinander schwenkbar sind, um so den Abstand zwischen den beiden Längsseiten der Tragplatte zu variieren.

8. Kultivierungskanal nach Anspruch 7, **dadurch gekennzeichnet, dass** die Tragplattenabschnitte wenigstens im Wesentlichen in ihrer eigenen Ebene schwenkbar sind.

9. Kultivierungskanal nach Anspruch 7 oder 8, **dadurch gekennzeichnet, dass** die Tragplatte aus einem manuell verformbaren Material hergestellt ist, um den Tragplattenabschnitten so zu ermöglichen, dass sie durch Verformung relativ zueinander verschwenken.

10. Kultivierungskanal nach Anspruch 7, 8 oder 9, **dadurch gekennzeichnet, dass** die Tragplatte mit wenigstens einem Filmscharnier (36) versehen ist, um das die Tragplattenabschnitte relativ zueinander schwenken können.

11. Kultivierungskanal nach einem der Ansprüche 7-10, **dadurch gekennzeichnet, dass** benachbarte Tragplattenabschnitte über einen Verbindungsrand miteinander verbunden sind, der sich in Längsrichtung des Kultivierungskanals erstreckt.

12. Kultivierungskanal nach einem der Ansprüche 7-11, **dadurch gekennzeichnet, dass** wenigstens einige der Tragplattenabschnitte mit parallelen Tragbalken (31, 32) versehen sind, deren Längsrichtung mit der Längsrichtung des Kultivierungskanals einen Winkel einschließt, wobei der Winkel sich ändert, wenn die Tragplattenabschnitte relativ zueinander verschwenken.

13. Kultivierungskanal nach Anspruch 12, **dadurch gekennzeichnet, dass** wenigstens zwei Tragplattenabschnitte mit parallelen Tragbalken in einer spiegelsymmetrischen Anordnung versehen sind.

14. Kultivierungskanal nach einem der Ansprüche 7-13, **dadurch gekennzeichnet, dass** ein zentraler Tragplattenteil (28) in der Mitte der Tragfläche vorgesehen ist.

15. Kultivierungskanal nach einem der vorhergehenden Ansprüche, **dadurch gekennzeichnet, dass** die Längswandabschnitte eine V-Form zwischen sich definieren.

16. Kultivierungskanal nach Anspruch 15, **dadurch gekennzeichnet, dass** der Scheitelwinkel der V-Form zwischen 20 Grad und 150 Grad liegt, vorzugsweise zwischen 60 Grad und 120 Grad.

17. Kultivierungskanal nach Anspruch 15 oder 16, **dadurch gekennzeichnet, dass** die Unterseiten der Längswandabschnitte über einen Bodenabschnitt aneinander anschließen.

18. Kultivierungskanal nach Anspruch 17, **dadurch gekennzeichnet, dass** der Bodenabschnitt bogenförmig ist.

19. Kultivierungskanal nach Anspruch 18, **dadurch gekennzeichnet, dass** der Bodenabschnitt horizontal ausgerichtet ist.

20. Kultivierungskanal nach einem der vorhergehenden Ansprüche, **dadurch gekennzeichnet, dass** Mittel zur Änderung des Maßes der Tragplatte, in einer Richtung quer zum Kultivierungskanal gesehen, vorgesehen sind, um so das betreffende Maß der Tragplatte an die Breite des Kultivierungskanals anpassen zu können.

21. Verfahren zum Anpassen eines bestehenden Kultivierungskanals in einem Gewächshaus, wobei der Kultivierungskanal zwei Längswandabschnitte mit einem Hohlraum dazwischen aufweist, wobei das Verfahren die folgenden Schritte umfasst:
- Bereitstellen einer Tragplatte mit einer Tragfläche zum Tragen von Substratmaterial mit darin vorhandenen Pflanzen,
- Anbringen der Tragplatte derart, dass die Tragfläche den Hohlraum an seiner oberen Seite begrenzt, **gekennzeichnet durch** den folgenden Schritt:
- Verbinden der Tragplatte mit den Längswandabschnitten mittels einer Falzverbindung.

22. Verfahren nach Anspruch 21, **gekennzeichnet durch** die folgenden Schritte:
- Bereitstellen einer Tragplatte, deren Tragfläche eine Anzahl von Tragplattenabschnitten aufweist, die eine Schwenkbewegung relativ zueinander ausführen können, und
- Schwenken der Tragplattenabschnitte relativ zueinander, um so den Abstand zwischen den beiden Längsseiten der Tragplatte auf die Größe des Kultivierungskanals abzustimmen, bevor die Tragplatte angebracht wird.

23. Verfahren nach Anspruch 21 oder 22, **dadurch gekennzeichnet, dass** die Tragfläche an den Längsseiten der Tragplatte höher gelegen ist als der zentrale Abschnitt der Tragplatte zwischen den beiden Längsseiten.

24. Verfahren nach Anspruch 21, 22 oder 23, **dadurch gekennzeichnet, dass** die Tragfläche mit wenigstens einem vertikalen Durchgang zum Leiten von Wasser von der Oberseite der Tragplatte zu deren Unterseite versehen ist.

## Revendications

1. Canal de culture (81) permettant de supporter un matériau de substrat (19) et des plantes (21) qui poussent à l'intérieur de ce dernier dans une serre, comprenant deux portions de paroi longitudinales (82, 83), entre lesquelles une cavité est présente au moins partiellement pour évacuer l'eau en excès qui a été précédemment fournie aux plantes (21), lesquelles portions de paroi longitudinales sont raccordées entre elles au niveau de leurs extrémités inférieures par un fond (84), ledit canal de culture étant incorporé en combinaison avec des moyens de support permettant de supporter le matériau de substrat avec les plantes, lesdits moyens de support comprenant une plaque de support (85) ayant une surface de support (86) permettant de supporter le matériau de substrat avec les plantes, laquelle surface de support (86) délimite la cavité au niveau de son côté supérieur, **caractérisé en ce que** la plaque de support est raccordée aux portions de paroi longitudinales au moyen d'un joint replié.

2. Canal de culture selon la revendication 1, **caractérisé en ce que** la surface de support présente une pente entre un point le plus haut et un point le plus bas, vue en coupe.

3. Canal de culture selon la revendication 2, **caractérisé en ce que** la surface de support est au moins sensiblement concave ou convexe, vue en coupe.

4. Canal de culture selon la revendication 3, **caractérisé en ce que** la surface de support est au moins sensiblement en forme de V, vue en coupe.

5. Canal de culture selon l'une quelconque des revendications précédentes, **caractérisé en ce que** la surface de support est pourvue d'au moins un passage vertical (33, 34, 35 ; 89) permettant de faire passer de l'eau du côté supérieur de la plaque de support à la cavité.

6. Canal de culture selon la revendication 5, **caractérisé en ce que** ledit au moins un passage vertical est prévu à l'emplacement d'un point le plus bas de la surface de support.

7. Canal de culture selon l'une quelconque des revendications précédentes, **caractérisé en ce que** la surface de support comprend un nombre de portions de plaque de support qui sont pivotables les unes par rapport aux autres de façon à faire varier l'espacement entre les deux côtés longitudinaux de la plaque de support.

8. Canal de culture selon la revendication 7, **caractérisé en ce que** les portions de plaque de support sont au moins sensiblement pivotables dans leur propre plan.

9. Canal de culture selon la revendication 7 ou 8, **caractérisé en ce que** la plaque de support est faite d'un matériau déformable manuellement de façon à permettre aux portions de plaque de support de pivoter les unes par rapport aux autres par déformation.

10. Canal de culture selon la revendication 7, 8 ou 9, **caractérisé en ce que** la plaque de support est pourvue d'au moins une charnière de film (36) autour de laquelle les portions de plaque de support peuvent pivoter les unes par rapport aux autres.

11. Canal de culture selon l'une quelconque des revendications 7 à 10, **caractérisé en ce que** les portions de plaque de support adjacentes sont raccordées les unes aux autres par un bord de raccordement qui s'étend dans la direction longitudinale du canal de culture.

12. Canal de culture selon l'une quelconque des revendications 7 à 11, **caractérisé en ce qu'**au moins certaines des portions de plaque de support sont pourvues de poutres parallèles (31, 32) dont la direction longitudinale comprend un angle avec la direction longitudinale du canal de culture, lequel angle change lorsque les portions de plaque de support pivotent les unes par rapport aux autres.

13. Canal de culture selon la revendication 12, **caractérisé en ce qu'**au moins deux portions de plaque de support sont pourvues de poutres parallèles en symétrie bilatérale.

14. Canal de culture selon l'une quelconque des revendications 7 à 13, **caractérisé en ce qu'**une partie de plaque de support centrale (28) est prévue au centre de la surface de support.

15. Canal de culture selon l'une quelconque des revendications précédentes, **caractérisé en ce que** lesdites portions de paroi longitudinales définissent une forme en V entre elles.

16. Canal de culture selon la revendication 15, **caractérisé en ce que** le sommet de la forme en V varie entre 20 degrés et 150 degrés, de préférence entre 60 degrés et 120 degrés.

17. Canal de culture selon la revendication 15 ou 16, **caractérisé en ce que** les côtés de fond des portions de paroi longitudinales se rejoignent par l'intermédiaire d'une portion de fond.

18. Canal de culture selon la revendication 17, **caractérisé en ce que** ladite portion de fond est de forme arquée.

19. Canal de culture selon la revendication 18, **caractérisé en ce que** ladite portion de fond est orientée horizontalement.

20. Canal de culture selon l'une quelconque des revendications précédentes, **caractérisé en ce que** des moyens sont prévus pour changer la dimension de la plaque de support, vue dans une direction transversale au canal de culture, de façon à pouvoir adapter la dimension en question de la plaque de support à la largeur du canal de culture.

21. Procédé permettant d'adapter un canal de culture existant dans une serre, ledit canal de culture comprenant deux portions de paroi longitudinales avec une cavité entre elles, lequel procédé comprend les étapes
- de fourniture d'une plaque de support comprenant une surface de support permettant de supporter un matériau de substrat avec des plantes présentes à l'intérieur,
- d'ajustement de la plaque de support de sorte que ladite surface de support délimite la cavité au niveau de son côté supérieur, **caractérisé par** l'étape de raccordement de la plaque de support aux portions de paroi longitudinales au moyen d'un joint replié.

22. Procédé selon la revendication 21, **caractérisé par** les étapes
- de fourniture d'une plaque de support dont la surface de support comprend un nombre de portions de plaque de support qui sont capables d'effectuer un mouvement de pivotement les unes par rapport aux autres, et
- de pivotement desdites portions de plaque de support les unes par rapport aux autres de façon à ajuster l'espacement entre les deux côtés longitudinaux de la plaque de support à la dimension du canal de culture avant l'ajustement de la plaque de support.

23. Procédé selon la revendication 21 ou 22, **caractérisé en ce que** la surface de support sur les côtés longitudinaux de la plaque de support est positionnée de façon à être plus élevée que la portion centrale de la plaque de support entre les deux côtés longitudinaux.

24. Procédé selon la revendication 21, 22 ou 23, **caractérisé en ce que** la surface de support est pourvue d'au moins un passage vertical permettant de faire passer de l'eau du côté supérieur de la plaque de support à son côté de fond.
